# EUROPÄISCHE PATENTSCHRIFT

(11) **EP 1 807 614 B1**
(45) Veröffentlichungstag und Bekanntmachung des Hinweises auf die Patenterteilung: **27.02.2008**
(21) Anmeldenummer: 05797707.6
(22) Anmeldetag: 13.10.2005
(51) Int. Cl.: F01N 11/00, F02D 41/06

(54) **VERFAHREN ZUR STEUERUNG EINES BETRIEBS EINES BEHEIZBAREN ABGASSENSORS EINES KRAFTFAHRZEUGS**
METHOD FOR CONTROLLING THE OPERATION OF A HEATABLE WASTE GAS SENSOR OF A MOTOR VEHICLE
PROCEDE POUR COMMANDER LE FONCTIONNEMENT D'UN CAPTEUR DE GAZ D'ECHAPPEMENT D'UN VEHICULE AUTOMOBILE, CE CAPTEUR POUVANT ETRE CHAUFFE

(30) Priorität: 30.10.2004 DE 102004052772
(43) Veröffentlichungstag der Anmeldung: 18.07.2007
(73) Patentinhaber: Volkswagen AG, 38436 Wolfsburg (DE); Skoda Auto a.s., 293 60 Mlada Boleslav (CZ)
(72) Erfinder: ZILLMER, Michael, 38173 Sickte (DE); HOLZ, Matthias, 38165 Lehre (DE); POTT, Ekkehard, 38518 Gifhorn (DE); PROCHAZKA, David, 50745 Libosovice (CZ)
(74) Vertreter: von Biedersee, Heidereich
(86) Internationale Anmeldenummer: PCT/EP2005/010988
(87) Internationale Veröffentlichungsnummer: WO 2006/048103

(56) Entgegenhaltungen:
- EP-A- 1 431 539
- US-A- 5 590 521
- US-A1- 2004 031 452

## Beschreibung

Die Erfindung betrifft ein Verfahren zur Steuerung eines Betriebs eines in einem Abgaskanal eines Kraftfahrzeugs angeordneten, mit einer internen oder externen Sensorheizeinrichtung ausgestatteten Abgassensors, wobei das Kraftfahrzeug einen Verbrennungsmotor und eine Abschaltautomatik aufweist, welche bei Vorliegen mindestens einer Stopp-Bedingung eine automatische Abschaltung des Verbrennungsmotors bewirkt beziehungsweise seine Wiederanschaltung unterdrückt. Das Kraftfahrzeug ist insbesondere ein Hybridfahrzeug, das über mindestens einen zusätzlichen Elektromotor zu seinem Antrieb verfügt. Die Erfindung betrifft ferner ein Kraftfahrzeug mit einer entsprechenden Sensorsteuerung.

Kraftfahrzeuge verfügen üblicherweise über einen oder mehrere im Abgaskanal angeordnete Abgassensoren, die ein zu einer Konzentration mindestens einer Abgaskomponente proportionales Messsignal ausgeben, das die Ermittlung dieser Konzentration ermöglicht. So liefern Lambdasonden ein Messsignal, das Auskunft über die Sauerstoffkonzentration im Abgas und damit über das der Verbrennungskraftmaschine zugeführte Luft/Kraftstoff-Verhältnis gibt und NOₓ-Sensoren ein der Konzentration von Stickoxiden NOₓ entsprechendes Signal. Die meisten solcher Sensoren benötigen für eine zuverlässige Messgenauigkeit eine spezifische Betriebstemperatur, weswegen sie mit einer in der Regel internen Sensorheizeinrichtung ausgestattet sind, die insbesondere nach einem Motorkaltstart den Sensor auf seine Betriebstemperatur erwärmt.

In diesem Zusammenhang ist bekannt, dass die in der Regel in den Sensoren eingesetzten keramischen Elemente sehr empfindlich auf den Eintrag von Kondensat, insbesondere von flüssigem Wasser, reagieren, was zur Beschädigung und zum Ausfall des Sensors führen kann. Aus diesem Grund werden diese Sensoren nach einem Motorkaltstart erst dann auf ihre Betriebstemperatur beheizt, wenn sichergestellt ist, dass am Einbauort des Sensors durch eine entsprechende Erwärmung der Abgasanlage kein Kondensat mehr ausfallen und den Sensor beaufschlagen kann. Bis zum Erreichen dieser Kondensationstemperatur des Abgases wird der Sensor üblicherweise bereits auf eine in Hinblick auf die zu unterdrückende Keramikschädigung maximal zulässige Temperatur vorgeheizt, um nach Überschreiten der Kondensationstemperatur des Abgases den Sensor möglichst schnell auf seine Betriebstemperatur zu bringen. Für die Steuerung dieses Vorgangs werden in modernen Motorsteuerungen Modelle abgelegt, welche die Abgastemperatur am Sensoreinbauort berechnen, oder es wird ein Wärmeeintrag in das Abgassystem akkumuliert. Erst nach Überschreiten eines oder auch beider dieser Werte wird die Sensorbeheizung zum Erreichen der Betriebsbereitschaft entsprechend angesteuert, das heißt zugeschaltet oder verstärkt. Alternativ kann die Abgastemperatur an der kritischen Stelle im Abgaskanal auch mittels eines Temperatursensors gemessen und in das Motorsteuergerät eingelesen werden.

Problematisch ist die Steuerung des Sensorbetriebs, insbesondere der Sensorbeheizung in Hybridfahrzeugen. Der Begriff Hybridfahrzeug bezeichnet Kraftfahrzeuge, bei denen mindestens zwei Antriebseinheiten miteinander kombiniert werden, die auf unterschiedliche Energiequellen zurückgreifen, um die Leistung für den Fahrzeugantrieb bereitzustellen. Besonders vorteilhaft ergänzen sich die Eigenschaften eines Verbrennungsmotors, der durch die Verbrennung von Benzin- oder Dieselkraftstoffen kinetische Energie erzeugt, und einer Elektromaschine, die elektrische Energie in Bewegungsenergie umsetzt, weswegen heutige Hybridfahrzeuge überwiegend mit einer solchen Kombination ausgestattet sind. Es lassen sich zwei verschiedene Hybridkonzepte unterscheiden. Bei den so genannten seriellen oder sequentiellen Hybridkonzepten erfolgt der Fahrzeugantrieb ausschließlich über den Elektromotor, während der Verbrennungsmotor über einen separaten Generator den elektrischen Strom für die Aufladung eines, den E-Motor speisenden Energiespeichers beziehungsweise für die direkte Speisung des Elektromotors erzeugt. Demgegenüber werden heute parallele Hybridkonzepte bevorzugt, bei denen der Fahrzeugantrieb sowohl durch den Verbrennungsmotor als auch durch den E-Motor dargestellt werden kann. In solchen Parallelkonzepten wird etwa der Elektromotor typischerweise in Betriebspunkten mit höheren Fahrzeuglasten unterstützend zum Verbrennungsmotor zugeschaltet.

In Hybridfahrzeugen wird aus Gründen des Kraftstoffverbrauchs grundsätzlich angestrebt, den Verbrennungsmotor in Betriebsbereichen mit nur geringem Wirkungsgrad, insbesondere im Leerlaufbetrieb, möglichst selten oder auch gar nicht zu betreiben. Hierzu ist bekannt, das Hybridfahrzeug mit einer Start-Stopp-Automatik auszustatten, die eine Abschaltautomatik umfasst, welche bei Vorliegen von Stopp-Bedingungen eine automatische Abschaltung des Verbrennungsmotors bewirkt (beziehungsweise seine Wiederanschaltung unterdrückt), und eine Anschaltautomatik, welche bei Vorliegen von Start-Bedingungen einen automatischen Start des Verbrennungsmotors bewirkt. Insbesondere wird der Verbrennungsmotor in Stillstandsphasen, das heißt bei einer Fahrzeuggeschwindigkeit von Null, durch die Abschaltautomatik abgestellt. Start-Stopp-Automatiken machen sich den Umstand zunutze, dass Hybridfahrzeuge über deutlich leistungsstärkere Elektrostartermotoren verfügen als konventionelle Anlasser, was insbesondere bei einem Wiederstart nach einem Automatikstopp einen schnellen-Motorhochlauf ermöglicht.

Wenn nun in einem Stopp-Betrieb des Verbrennungsmotors das im Abgassystem noch verbleibende Abgas unterhalb der Kondensationstemperatur abkühlt und währenddessen der Sensor weiterhin auf seiner Betriebstemperatur gehalten wird, kann es zum Kondensatausfall und bei einem nachfolgenden Wiederstart des Motors zur Beaufschlagung des Sensors mit dem Kondensat, insbesondere mit flüssigem Wasser, und somit zur Beschädigung des Sensors kommen. Wenn andererseits unmittelbar mit der automatischen Abschaltung des Verbrennungsmotors auch die Sensorbeheizung zurückgenommen oder ausgestellt wird, führt die Verzögerung, mit welcher der Sensor seine Betriebstemperatur nach einem Wiederstart des Motors wieder erreicht, zu einer unzureichend genauen Motorsteuerung und damit zu erhöhten Abgaswerten und/oder einem erhöhten Kraftstoffverbrauch.

Aufgabe der vorliegenden Erfindung ist es, ein Verfahren zur Steuerung eines beheizbaren Abgassensors, insbesondere in einem Hybridfahrzeug mit Abschaltautomatik, bereitzustellen, das im Stopp-Betrieb des Verbrennungsmotors und bei dem nachfolgenden Wiederstart den Sensor möglichst lange in Betriebsbereitschaft hält und gleichzeitig den Sensor vor Schädigung durch Kondensatbeaufschlagung schützt. Es soll ferner ein Kraftfahrzeug mit einer entsprechenden, optimierten Sensorsteuerung vorgeschlagen werden.

Diese Aufgabe wird durch ein Verfahren mit den Merkmalen des Anspruchs 1 gelöst. Erfindungsgemäß ist vorgesehen, dass
(a) nach einer automatischen Abschaltung des Verbrennungsmotors durch die Abschaltautomatik ein erster zukünftiger Zeitpunkt ermittelt wird, an dem die Abgastemperatur im Abgaskanal eine Kondensationstemperatur, unterhalb welcher ein Kondensatausfall aus dem Abgas möglich ist, unterschreiten wird,
(b) ein zweiter Zeitpunkt ermittelt wird, an dem eine Heizleistung der Sensorheizeinrichtung unterbrochen oder reduziert werden muss, damit spätestens zum ersten zukünftigen Zeitpunkt eine Sensortemperatur des Abgassensors auf eine maximal zulässige Sensortemperatur abgefallen sein wird, und
(c) bei Erreichen des zweiten Zeitpunkts die Heizleistung der Sensorheizeinrichtung unterbrochen oder reduziert wird.

Erfindungsgemäß wird somit bei einer automatischen Abschaltung des Verbrennungsmotors eine Hochrechnung des zukünftig zu erwartenden Temperaturverlaufs des noch im Abgaskanal verbleibenden Abgases durchgeführt, um den Zeitpunkt zu ermitteln, an dem dieses die kritische Kondensationstemperatur, insbesondere von Wasser, erreichen oder unterschreiten wird. Um des Weiteren zu vermeiden, dass zu diesem Zeitpunkt der Abgassensor noch eine Temperatur aufweist, bei der eine Sensorschädigung durch Beaufschlagung mit Kondensat zu befürchten ist, wird unter Berücksichtigung der zu erwartenden Abkühlungsgeschwindigkeit des Sensors ein zweiter Zeitpunkt ermittelt, an dem seine Beheizung reduziert oder vollständig unterbrochen werden soll. Erst wenn dieser zweite Zeitpunkt tatsächlich erreicht wird, erfolgt die Unterbrechung beziehungsweise Reduzierung der Sensorbeheizung. Auf diese Weise wird sichergestellt, dass der Abgassensor für eine maximal mögliche Dauer bei ausgeschaltetem Verbrennungsmotor in Betriebsbereitschaft gehalten wird. Sofern der Verbrennungsmotor vor Erreichen des berechneten zweiten Zeitpunkts wieder angeschaltet wird, erfolgt keine Herabsetzung der Heizleistung, sodass der Sensor sich unmittelbar bei Motorstart wieder in seinem Betriebszustand befindet, wodurch eine optimale Motorsteuerung, insbesondere des Luft/Kraftstoff-Gemischs (Lambdaregelung) möglich ist. Erst wenn bei abgeschaltetem Verbrennungsmotor der zweite Zeitpunkt erreicht wird, erfolgt die Zurücknahme der Sensorheizung, sodass gewährleistet ist, dass bei Erreichen der Kondensationstemperatur des Abgases der Sensor seine kritische Temperatur erreicht oder unterschritten hat und somit vor Beschädigungen durch Kondensatbeaufschlagung geschützt ist.

Wie bereits erwähnt, erfolgt die Ermittlung des Zeitpunkts, an welchem die Temperatur des im Abgaskanal befindlichen Abgases die Kondensationstemperatur voraussichtlich überschreiten wird, anhand eines zu erwartenden Verlaufs der Abgastemperatur. Dieser kann etwa mittels eines empirischen Modells ermittelt werden, bei dem beispielsweise im Fahrzeug und/oder auf Motorprüfständen der tatsächlich erfolgende Temperaturverlauf gegebenenfalls unter verschiedenen Randbedingungen (Anfangstemperatur des Abgases, Außentemperatur, etc.) gemessen wird. Die Messdaten können dann beispielsweise in Form von Kennfeldern in der Motorsteuerung abgelegt werden. Alternativ kann der zu erwartende Temperaturverlauf auch mittels eines physikalischen Modells ermittelt werden, bei dem physikalische Gesetze angewendet werden unter optionaler Berücksichtigung verschiedener Parameter, wie geometrische Gegebenheiten der Abgasanlage, Wärmeleitfähigkeiten der Komponenten der Abgasanlage, insbesondere des Abgasrohrs, Außentemperatur und/oder die aktuelle Abgastemperatur und andere. Des Weiteren sind auch kombinierte empirisch-physikalische Rechenmodelle denkbar sowie Modelle, die auf einer an einer anderen Stelle im Abgas gemessenen Temperatur basieren.

Um die tatsächliche Gefährdung des Abgassensors durch Kondensatbeaufschlagung möglichst genau zu erfassen, wird der zu erwartende Temperaturverlauf nach einer vorteilhaften Ausgestaltung der Erfindung für den Einbauort des Abgassensors im Abgaskanal ermittelt. Noch vorteilhafter kann alternativ oder zusätzlich der Temperaturverlauf für eine Position stromauf des Abgassensors hochgerechnet werden, insbesondere für eine Position, bei der eine maximale Abkühlgeschwindigkeit und damit die tiefsten Temperaturen vorliegen. Erfolgt nämlich an einer solchen, dem Sensor vorgelagerten Position ein Kondensatausfall während des Motorstillstands, kann dieses Kondensat beim Wiederstart des Motors abgerissen und in den Sensor eingetragen werden.

Nach einer bevorzugten Ausgestaltung der Erfindung wird der erste Zeitpunkt, an dem die Kondensationstemperatur im Abgaskanal voraussichtlich unterschritten werden wird, während des Stopp-Betriebs des Motors und vor Erreichen des zweiten Zeitpunkts (Abschaltzeitpunkt der Sensorbeheizung) laufend in Abhängigkeit einer aktuellen, vorzugsweise gemessenen Abgastemperatur neu berechnet und korrigiert. Auf diese Weise lässt sich ein von der Prognose abweichender Temperaturverlauf des Abgases berücksichtigen und der Abschaltzeitpunkt der Sensorbeheizung laufend anpassen.

Vorzugsweise erfolgt auch die Ermittlung des zweiten Zeitpunkts, an dem die Heizleistung der Sensorheizeinrichtung reduziert oder unterbrochen werden soll, anhand eines bei abgeschaltetem Verbrennungsmotor zu erwartenden Verlaufs der Sensortemperatur. Insbesondere wird der Verlauf der Sensortemperaturen in Abhängigkeit von dem zuvor ermittelten Verlauf der Abgastemperatur, insbesondere am oder stromauf des Einbauortes des Sensors bestimmt. Auch für den Sensortemperaturverlauf kann ein messwertbezogenes empirisches Modell, ein physikalisches Modell oder ein kombiniertes, empirisch-physikalisches Modell herangezogen werden. Vorzugsweise wird in beiden Fällen eine aktuell gemessene Abgastemperatur und/oder die Außentemperatur berücksichtigt.

Nach einer besonders bevorzugten Ausgestaltung der Erfindung wird die Temperatur des Abgassensors auf der maximal zulässigen Sensortemperatur gehalten, nachdem der zweite Zeitpunkt erreicht und die Heizleistung ganz oder teilweise zurückgenommen wurde. Auf diese Weise wird der Sensor in einem Vorwärmzustand gehalten und kann bei Wiederstart des Verbrennungsmotors rasch wieder auf die Betriebstemperatur angehoben werden.

Die Erfindung betrifft ferner ein Kraftfahrzeug mit einem Verbrennungsmotor, insbesondere ein Hybridfahrzeug mit zusätzlich einem Elektromotor, einem in einem Abgaskanal des Verbrennungsmotors angeordneten und mit einer internen oder externen Sensorheizeinrichtung ausgestatteten Abgassensor und mit einer Abschaltautomatik, welche bei Vorliegen mindestens einer Stopp-Bedingung eine automatische Abschaltung des Verbrennungsmotors bewirkt. Das erfindungsgemäße Fahrzeug zeichnet sich durch Mittel zur Steuerung des Betriebs des Abgassensors gemäß dem vorbeschriebenen erfindungsgemäßen Verfahrens aus. Diese Steuerungsmittel umfassen insbesondere einen Programmalgorithmus zur Durchführung der Steuerung, der vorzugsweise in dem Motorsteuergerät oder in einer separaten Steuereinheit hinterlegt ist.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: schematisch den Aufbau einer erfindungsgemäßen Hybridantriebseinheit;
- Figur 2: ein Ablaufdiagramm zur Durchführung der erfindungsgemäßen Sensorsteuerung und
- Figur 3: zeitliche Verläufe verschiedener Kenngrößen während einer automatischen Abschaltung eines Verbrennungsmotors eines Kraftfahrzeugs gemäß der vorliegenden Erfindung.

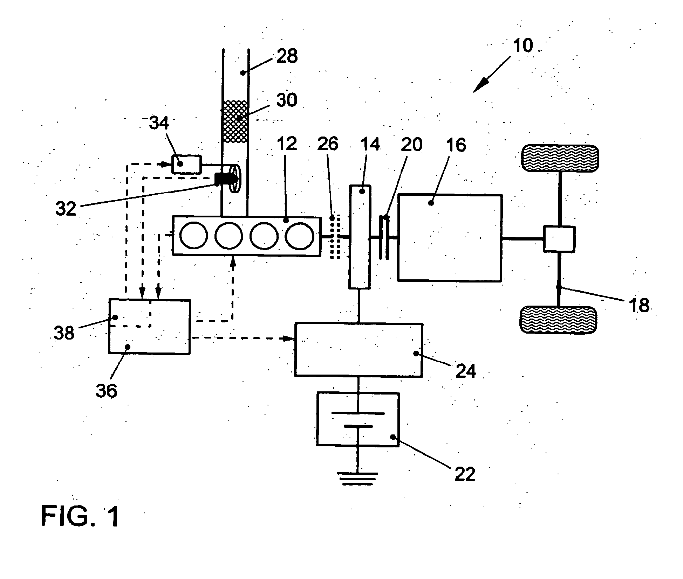

In Figur 1 ist mit 10 insgesamt eine Hybridantriebseinheit eines im Einzelnen nicht weiter dargestellten Hybridfahrzeuges bezeichnet. Der Antrieb des Fahrzeuges erfolgt wahlweise oder gleichzeitig durch einen konventionellen Verbrennungsmotor 12 (Otto- oder Dieselmotor) sowie einen Elektromotor 14, die beide auf die gleiche Welle wirken. Insbesondere wirkt der Elektromotor 14 direkt oder über ein Getriebe oder über einen Riemen, einen Zahnriemen oder eine andere kraft- und/oder formschlüssige Verbindung auf die Kurbelwelle des Verbrennungsmotors 12. Verbrennungsmotor 12 und Elektromotor 14 sind über ein Getriebe 16 (Automatik- oder Handschaltgetriebe) mit einem angedeuteten Antriebsstrang 18 verbunden. Die Entkopplung der Antriebswellen des Verbrennungsmotors 12 beziehungsweise des Elektromotors 14 vom Getriebe 16 erfolgt über eine Kupplung 20, die durch Betätigung eines nicht dargestellten Kupplungspedals durch den Fahrer geöffnet werden kann und bei NichtBetätigung geschlossen ist.

Der Elektromotor 14, der beispielsweise ein Drehstrom-Asynchronmotor oder -Synchronmotor ist, kann wahlweise im Motor- oder Generatorbetrieb betrieben werden. Im motorischen Betrieb treibt der Elektromotor 14 den Antriebsstrang 18 unter Verbrauch von elektrischer Energie (Strom) an. Diese bezieht der Elektromotor 14 aus einem Energiespeicher 22, der beispielsweise eine Batterie und/oder ein Kondensatorspeicher sein kann. Zusätzlich kann der Motorbetrieb des Elektromotors 14 den angeschalteten Verbrennungsmotor 12 unterstützen. Im generatorischen Betrieb hingegen wird der Elektromotor 14 durch den Verbrennungsmotor 12 beziehungsweise einen Schub des Fahrzeugs angetrieben und wandelt die kinetische Energie in elektrische Energie zur Auffüllung des Energiespeichers 22 um. Die Umschaltung des Elektromotors 14 zwischen Motor- und Generatorbetrieb erfolgt durch eine Leistungselektronik 24, die gleichzeitig eine möglicherweise erforderliche Umrichtung zwischen Gleich- und Wechselstrom vornimmt.

Gemäß dem dargestellten Konzept erfolgt der Fahrzeugantrieb überwiegend durch den Verbrennungsmotor 12, der durch den als Startergenerator ausgelegten Elektromotor 14 gestartet wird. Der Elektromotor 14 übernimmt zudem eine Boostfunktion, indem er in Hochlastsituationen, insbesondere bei Beschleunigungen des Fahrzeugs, unterstützend zum Fahrzeugantrieb zugeschaltet wird (motorischer Betrieb). Andererseits hat der Elektromotor 14 in Fahrsituationen, bei denen ein Überschuss kinetischer Energie des Fahrzeugs vorliegt, eine so genannte Rekuperationsfunktion, indem er im generatorischen Betrieb die Bewegungsenergie in kinetische Energie zur Ladung des Energiespeichers 22 umwandelt und somit gleichzeitig ein Bremsmoment bereitstellt. Der Elektromotor 14 weist bevorzugt eine Leistung von höchsten 40 kW, insbesondere von 8 bis 15 kW auf.

In Figur 1 ist zudem eine optionale zusätzliche Kupplung 26 angedeutet, die zwischen Verbrennungsmotor 12 und Elektromotor 14 angeordnet sein kann. Eine solche zusätzliche Kupplung 26 erlaubt die separate Abkopplung des Verbrennungsmotors 12 vom Antriebsstrang 18 beziehungsweise vom Elektromotor 14, wodurch sich grundsätzlich der Vorteil ergibt, dass bei ausgeschaltetem Verbrennungsmotor 12 seine mechanischen Reibungswiderstände nicht "mitgeschleppt" werden müssen. Die zusätzliche Kupplung 26 bewirkt daher zwar ein zusätzliches Einsparpotential von Kraftstoff, ist jedoch mit einem erheblichen Kosten-, Konstruktions- und Bauraumaufwand verbunden, weswegen sie bevorzugt nicht vorgesehen ist.

Ein von dem Verbrennungsmotor 12 kommendes Abgas wird durch einen Abgaskanal 28 geführt, in dem ein Katalysator 30 zur katalytischen Reinigung des Abgases vorgesehen ist. Dabei kann es sich um einen motornahen Vorkatalysator handeln, dem ein hier nicht dargestellter Hauptkatalysator nachgeschaltet ist. Zur Regelung des Verbrennungsmotors 12 und des Abgasreinigungssystems sind üblicherweise im Abgaskanal 28 verschiedene Sensoren installiert, die einen Messwert liefern, der proportional zu einer Konzentration einer Abgaskomponente ist. Im dargestellten Beispiel ist stromauf des Katalysators 30 eine Lambdasonde 32 angeordnet, welche die Bestimmung der Sauerstoffkonzentration im Abgas und damit dem der Verbrennungskraftmaschine 12 zugeführten Luft/Kraftstoff-Verhältnis erlaubt. In Abhängigkeit von dem Messsignal der Lambdasonde 32 wird im Wege der so genannten Lambdaregelung das Luft/Kraftstoff-Verhältnis des Motors 12 eingestellt. Die Lambdasonde 32 benötigt für die Lieferung zuverlässiger Messsignale eine spezifische Betriebstemperatur, weswegen sie mit einer Sensorheizeinrichtung 34 ausgestattet ist. Für ein besseres Verständnis ist in der vorliegenden Darstellung die Heizeinrichtung 34 durch ein externes Element veranschaulicht. Üblicherweise verfügen Lambdasonden und andere Gassensoren jedoch über eine interne Heizeinrichtung.

Die Steuerung des Betriebs des Verbrennungsmotors 12, der Leistungselektronik 24 sowie der Sensorheizeinrichtung 34 erfolgt durch ein Motorsteuergerät 36, in welches ein mit 38 angedeuteter Programmalgorithmus zur Steuerung des Sensorbetriebs, dessen Wirkungsweise nachfolgend beschrieben wird, abgespeichert ist. Alternativ kann der Programm algorithmus 38 auch in einer separaten Steuereinheit vorgesehen sein.

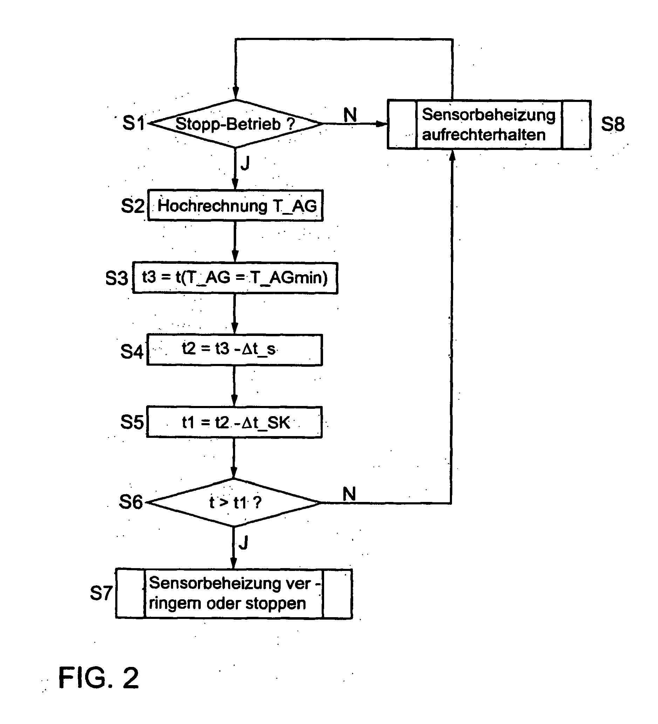

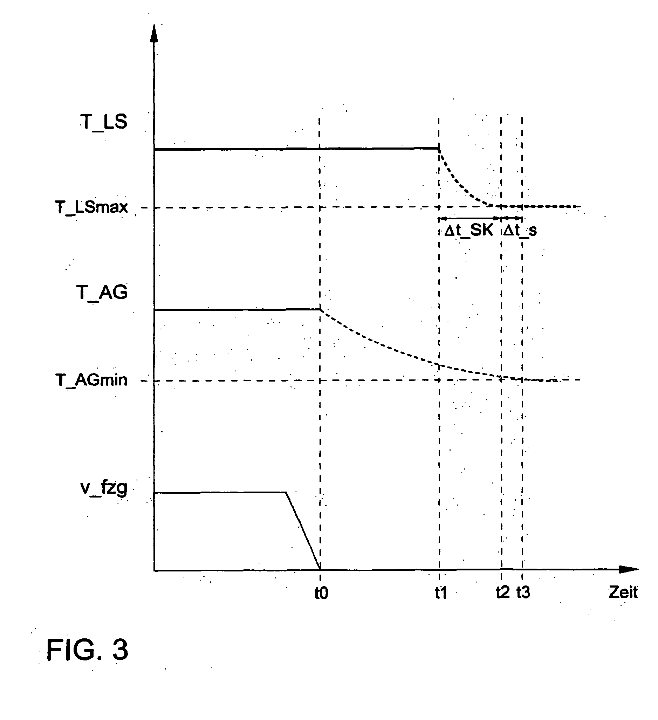

Der Ablauf des vorliegenden Verfahrens zur Steuerung des beheizbaren Lambdasensors 32 in einer bevorzugten Ausgestaltung wird mit Hilfe der Figuren 2 und 3 erläutert. In dem mittleren Teil von Figur 3 ist der Verlauf der Abgastemperatur T_AG im Abgaskanal 28 im Bereich des Einbauortes der Lambdasonde 32 gezeigt und im oberen Teil der Verlauf der Sensortemperatur T_LS des Lambdasensors 32. Im unteren Teil der Abbildung ist die Fahrzeuggeschwindigkeit v_fzg dargestellt. Die Fahrzeuggeschwindigkeit v_fzg fällt von einem zunächst konstanten Niveau ab, ehe sie zum Zeitpunkt t0 0 km/h erreicht, das heißt, es kommt zum Fahrzeugstilistand. Eine solche Situation kann beispielsweise bei einem Ampetstopp vorliegen. Eine Fahrzeuggeschwindigkeit von 0 oder nahe 0 stellt eine Stopp-Bedingung dar, so dass der Verbrennungsmotor 12 durch die in der Motorsteuerung 36 hinterlegte Abschaltautomatik abgeschaltet wird. Der Sensor 32, der durch die Sensorheizeinrichtung 34 zum Zeitpunkt t0 noch beheizt wird, behält seine relative Sensortemperatur T_LS zunächst noch bei. Hingegen beginnt die Abgastemperatur T_AG innerhalb des nun nicht mehr durchfluteten Abgaskanals 28 unmittelbar mit Beginn des Stopp-Betriebs des Verbrennungsmotors 12 sich abzukühlen.

Gemäß Figur 2 beginnt das erfindungsgemäße Verfahren zur Steuerung des Sensors 32 mit Schritt 1, in dem zunächst abgefragt wird, ob ein Stopp-Betrieb des Verbrennungsmotors 12 vorliegt oder nicht. Zusätzlich sollte an dieser Stelle noch sichergestellt werden, dass bei Vorliegen des Stopp-Betriebs das Fahrzeug nicht endgültig abgestellt werden soll, das heißt beispielsweise ein Zündschlüssel oder -schalter nicht auf der Stellung AUS steht. Wird die Abfrage in Schritt S1 mit ja beantwortet, das heißt, der Verbrennungsmotor 12 befindet sich im Stopp-Betrieb und das Fahrzeug soll nicht entgültig abgestellt werden, geht das Verfahren zu Schritt S2 über, wo eine Hochrechnung des zu erwartenden Verlaufs der Abgastemperatur T_AG erfolgt. Die Hochrechung kann etwa auf ein messwertbezogenes empirisches Modell zurückgreifen oder auch auf ein physikalisches Modell. Im Falle des empirischen Modells wird auf in Experimenten gemessene Abkühlcharakteristiken des Abgases zurückgegriffen. Diese Daten werden dann in der Motorsteuerung 36 hinterlegt. Vorzugsweise wird die Messung des Temperaturverlaufs unter verschiedenen Randbedingungen, insbesondere unterschiedlichen Anfangstemperaturen des Abgases sowie unterschiedlichen Außentemperaturen, erfasst und abgespeichert. Alternativ kann ein physikalisches Modell zur Ermittlung des zu erwartenden Temperaturverlaufs des Abgases verwendet werden, wobei physikalische Gesetze zur Vorausberechnung des Temperaturverlaufs angewandt werden. Vorzugsweise werden hier spezifische Parameter, wie die Geometrie der Abgasanlage, die Wärmeleitfähigkeiten der Komponenten der Abgasanlage, Außentemperatur und/oder die aktuelle Abgastemperatur berücksichtigt. Der durch die Hochrechnung in Schritt S2 prognostizierte zu erwartende Temperaturverlauf des Abgases T_AG ist in Figur 3 durch die gestrichelte Kurve angedeutet. Aus diesem zu erwartenden Verlauf der Abgastemperatur T_AG wird im nachfolgenden Schritt S3 der Zeitpunkt t3 bestimmt, an dem die Abgastemperatur T_AG auf eine vorgegebene untere Temperaturschwelle T_AGmin voraussichtlich abgefallen sein wird. Die Temperaturschwelle T_AGmin entspricht einer Temperatur, unterhalb welcher ein Kondensatausfall, insbesondere von Wasser, möglich ist. Demnach entspricht die Temperaturschwelle T_AGmin im Wesentlichen der Temperatur des Sättigungsdampfdrucks des Wassers im Abgas bei Normaldruck, typischerweise etwa 50 °C.

Es gilt zu vermeiden, dass die Lambdasonde 32 zum Zeitpunkt t3 noch eine Sensortemperatur T_LS aufweist, bei der sie im Falle einer Beaufschlagung mit Kondensat beschädigt werden könnte. Diese bei einer Abgastemperatur ≤ T_AGmin maximal zulässige Sensortemperatur T_LSmax ist im oberen Teil der Figur 3 angedeutet. Um einen besonders sicheren Schutz des Sensors 32 vor Kondensatbeaufschlagung zu gewährleisten, wird im anschließenden Schritt S4 eine Sicherheitszeitspanne Δt_s von dem zuvor ermittelten Zeitpunkt t3 abgezogen, bei dem das Abgas die Kondensationstemperatur T_AGmin voraussichtlich erreichen wird. Als Resultat wird der Zeitpunkt t2 erhalten, welcher einem angestrebten Zeitpunkt entspricht, an dem die Sensortemperatur T_LS auf die maximal zulässige Sensortemperatur T_LSmax abgekühlt sein soll.

Im nachfolgenden Schritt S5 wird dann der Zeitpunkt t1 ermittelt, an dem die Heizleistung der Sensorheizeinrichtung 34 unterbrochen oder zumindest reduziert werden muss, damit zum Zeitpunkt t2, spätestens aber zum Zeitpunkt t3, die Sensortemperatur T_LS der Lambdasonde 32 auf die kritische Sensortemperatur T_LSmax abgefallen sein wird. Hierfür wird eine Sensorabkühldauer Δt_SK von dem Zeitpunkt t2 subtrahiert. Die Sensorabkühldauer Δt_SK wird anhand eines bei abgeschaltetem Verbrennungsmotor 12 zu erwartenden Verlaufs der Sensortemperatur T_LS (in Figur 3 gestrichelt dargestellt) ermittelt. Dieser zu erwartende Sensortemperaturverlauf T_LS erfolgt vorzugsweise in Abhängigkeit von dem in Schritt S2 prognostizierten Verlauf der Abgastemperatur T_AG. Auch hier kann ein messwertbezogenes empirisches Modell oder ein physikalisches Modell herangezogen werden.

In der nachfolgenden Abfrage in Schritt S6 wird überprüft, ob seit dem Stopp-Betrieb des Verbrennungsmotors 12 zum Zeitpunkt t0 bereits der angestrebte Abschaltzeitpunkt t1 erreicht wurde, an dem die Heizeinrichtung 34 der Lambdasonde 32 abgestellt (oder leistungsreduziert) werden soll. Wird diese Abfrage verneint, das heißt der Zeitpunkt t1 ist noch nicht erreicht, wird die Sondenbeheizung weiterhin aufrechterhalten, so dass die Lambdasonde 32 weiterhin ihre optimale Betriebstemperatur behält (Schritt S8). Wird die Abfrage in Schritt S6 hingegen bejaht, das heißt der Zeitpunkt t1 ist erreicht, geht das Verfahren zu Schritt S7 über, worin die Sensorbeheizung gestoppt (oder verringert) wird.

Die vorstehend beschriebenen Verfahrensschritte S2 bis S6, die auf die Ermittlung und Überwachung des angestrebten Abschaltzeitpunkts t1 abzielen, erfolgen unmittelbar nach automatischer Abschaltung des Verbrennungsmotors 12 zum Zeitpunkt t0. Es ist aber bevorzugt vorgesehen, dass die Ermittlung des Abschaltzeitpunkts t1 der Sensorbeheizung bis zum Erreichen dieses Zeitpunkts, das heißt im Zeitintervall t0 bis t1, ständig korrigiert wird, indem eine tatsächlich im Abgaskanal 28 vorliegende Abgastemperatur T_AG ermittelt und berücksichtigt wird. Die aktuelle Abgastemperatur T_AG kann beispielsweise mit einem im Abgaskanal 28, im Bereich der Lambdasonde 32 oder stromauf von dieser angeordneten Temperatursensor (in Figur 1 nicht dargestellt) gemessen werden. Hierdurch wird die Genauigkeit des Verfahrens noch weiter verbessert.

In einer vorteilhaften Ausgestaltung des Verfahrens wird in einer Situation, in welcher der Wiederstart des Verbrennungsmotors 12 bei bereits verringerter oder ausgeschalteter Sensorheizleistung (t > t1) erfolgt, geprüft, ob die Abgastemperatur T_AG bereits unter die Kondensationstemperatur T_AGmin gefallen ist. Ist dies nicht der Fall, wird die Sonde - da kein Kondensatausfall vorgelegen haben kann - sofort wieder mit einer maximal zulässigen Heizleistung beaufschlagt werden, um möglichst schnell wieder ihre Betriebstemperatur zu erreichen und die Lambdaregelung freischalten zu können. Für den Fall, dass die Abgastemperaturschwelle T_AGmin bereits unterschritten wurde, ist weiterhin vorgesehen, nach erneutem Überschreiten, der Schwelle T_AGmin (oder alternativ nach Überschreiten eines Mindestwertes für eine in die Abgasanlage eingetragene Abgaswärmemenge) eine verhältnismäßig geringere Heizleistung vorzugeben, um zu verhindern, dass gegebenenfalls durch Kondensatreste eine Beschädigung der Sonde 32 erfolgt. Besonders bevorzugt wird die Intensität der Heizleistung zusätzlich an die Temperaturdifferenz gekoppelt, um welche die Abgastemperatur T_AG die Kondensationsschwelle T_AGmin zuvor unterschritten hat. Alternativ kann auch eine Toleranzzeitspanne vorgegeben werden, für welche die Kondensationstemperatur T_AGmin unterschritten werden darf, um dennoch sofort die maximale Heizleistung zuzulassen. In solchen Fällen kann nämlich bei kleinen Zeitspannen davon ausgegangen werden, dass nur eine sehr geringe Kondensatmasse ausgefallen ist.

Mit dem beschriebenen Verfahrensablauf wird sichergestellt, dass vor einem möglichen Kondensatausfall in der Abgasanlage die Sensorbeheizung und damit die Sensortemperatur bis auf die Schwelle T_LSmax verringert wird, so dass durch eine Beaufschlagung des Sensors mit Kondensat keine Beschädigung zu befürchten ist. Gleichzeitig wird gewährleistet, dass der Sensor über eine maximal mögliche Dauer im Stopp-Betrieb des Verbrennungsmotors 12 betriebsbereit bleibt und somit bei einem folgenden Wiederstart des Motors infolge einer weiterhin freigegebenen Lambdaregelung den Soll-Lambdawert genau einhalten kann. Damit werden gerade in der instationären Betriebsphase des Verbrennungsmotors 12 nach seinem Wiederstart (beispielsweise in Form eines Beschleunigungsvorgangs), der in der Regel mit erhöhten Abgasmassenströmen verbunden ist, eine optimale Abgasqualität und somit eine hohe Konvertierungsleistung des nachgeschalteten Katalysators 30 sowie auch geringer Kraftstoffverbrauch infolge einer präzisen Lambdaregelung gewährleistet.

### Bezugszeichenliste

- 10: Hybridantriebseinheit
- 12: Verbrennungsmotor
- 14: Elektromotor
- 16: Getriebe
- 18: Antriebsstrang
- 20: Kupplung
- 22: Energiespeicher / Batterie
- 24: Leistungselektronik
- 26: zusätzliche Kupplung
- 28: Abgaskanal
- 30: Katalysator
- 32: Abgassensor / Lambdasonde
- 34: Sensorheizeinrichtung
- 36: Motorsteuergerät
- 38: Programmalgorithmus

- T_AG: Abgastemperatur
- T_AGmin: Kondensationstemperatur des Abgases
- T_LS: Sensortemperatur
- T_LSmax: maximal zulässige Sensortemperatur bei Kondensationstemperatur des Abgases
- t0: Beginn Stopp-Betrieb der Verbrennungskraftmaschine
- t1: Beginn Verringerung oder Unterbrechung der Sensorbeheizung
- t2: Erreichen der maximal zulässigen Sensortemperatur
- t3: Erreichen der Kondensationstemperatur des Abgases
- Δt_s: Sicherheitszeitspanne
- Δt_SK: Sensorabkühldauer
- v_fzg: Fahrzeuggeschwindigkeit

## Patentansprüche

1. Verfahren zur Steuerung des Betriebs eines in einem Abgaskanal (28) eines Kraftfahrzeugs angeordneten, mit einer internen oder externen Sensorheizeinrichtung (34) ausgestatteten Abgassensors (32), wobei das Kraftfahrzeug einen Verbrennungsmotor (12) und eine Abschaltautomatik umfasst, welche bei Vorliegen mindestens einer Stopp-Bedingung eine automatische Abschaltung des Verbrennungsmotors (12) bewirkt, **dadurch gekennzeichnet, dass**
(a) nach einer automatischen Abschaltung des Verbrennungsmotors (12) durch die Abschaltautomatik ein erster zukünftiger Zeitpunkt (t3) ermittelt wird, an dem die Abgastemperatur (T_AG) im Abgaskanal (28) eine Kondensationstemperatur (T_AGmin), unterhalb welcher ein Kondensatausfatl aus dem Abgas möglich ist, unterschreiten wird,
(b) ein zweiter Zeitpunkt (t1) ermittelt wird, an dem eine Heizleistung der Sensorheizeinrichtung (34) unterbrochen oder reduziert werden muss, damit spätestens zum ersten zukünftigen Zeitpunkt (t3) eine Sensortemperatur (T_LS) des Abgassensors (32) auf eine maximal zulässige Sensortemperatur (T_LSmax) abgefallen sein wird, und
(c) bei Erreichen des zweiten Zeitpunkts (t1) die Heizleistung der Sensorheizeinrichtung (34) unterbrochen oder reduziert wird.

2. Verfahren nach Anspruch 1, **dadurch gekennzeichnet, dass** zur Bestimmung des zweiten Zeitpunkts (t1) eine Sicherheitszeitspanne (Δt_s) berücksichtigt wird, um welche der zweite Zeitpunkt (t1) vorverlegt wird.

3. Verfahren nach Anspruch 1 oder 2, **dadurch gekennzeichnet, dass** die Ermittlung des ersten zukünftigen Zeitpunkts (t3), an dem die Abgastemperatur (T_AG) im Abgaskanal (28) die Kondensationstemperatur (T_AGmin) unterschreiten wird, anhand eines bei abgeschaltetem Verbrennungsmotor (12) zu erwartenden Verlaufs der Abgastemperatur (T_AG) erfolgt.

4. Verfahren nach Anspruch 3, **dadurch gekennzeichnet, dass** der zu erwartende Temperaturverlauf mittels eines messwertbezogenen empirischen Modells ermittelt wird, insbesondere unter Berücksichtigung einer Außentemperatur und/oder einer aktuellen Abgastemperatur.

5. Verfahren nach Anspruch 3 oder 4, **dadurch gekennzeichnet, dass** der zu erwartende Temperaturverlauf mittels eines physikalischen Modells ermittelt wird das anhand physikalischer Gesetze, insbesondere unter Berücksichtigung geometrischer Voraussetzungen der Abgasanlage, Wärmeleitfähigkeiten der Abgasanlage, einer Außentemperatur und/oder einer aktuellen Abgastemperatur den Temperaturverlauf berechnet.

6. Verfahren nach einem der Ansprüche 3 bis 5, **dadurch gekennzeichnet, dass** der zu erwartende Temperaturverlauf für den Einbauort des Abgassensors (32) ermittelt wird oder für eine Position stromauf des Abgassensors (32), insbesondere für eine Position maximaler Abkühlgeschwindigkeit.

7. Verfahren nach einem der vorhergehenden Ansprüche, **dadurch gekennzeichnet, dass** der erste Zeitpunkt (t3), an dem die Abgastemperatur (T_AG) im Abgaskanal (28) die Kondensationstemperatur (T_AGmin) unterschreiten wird, während des Stopp-Betriebs des Verbrennungsmotors (12) und vor Erreichen des zweiten Zeitpunkts (t1) laufend in Abhängigkeit einer gemessenen aktuellen Abgastemperatur korrigiert wird.

8. Verfahren nach einem der vorhergehenden Ansprüche, **dadurch gekennzeichnet, dass** die Ermittlung des zweiten Zeitpunkts (t1), an dem die Heizleistung der Sensorheizeinrichtung (34) unterbrochen oder reduziert werden soll, anhand eines bei abgeschalteter Verbrennungskraftmaschine (12) zu erwartenden Verlaufs der Sensortemperatur (T_LS) erfolgt.

9. Verfahren nach Anspruch 8, **dadurch gekennzeichnet, dass** der zu erwartende Verlauf der Sensortemperatur (T_LS) in Abhängigkeit von dem ermittelten Verlauf der Abgastemperatur (T_AG) bestimmt wird.

10. Verfahren nach Anspruch 8 oder 9, **dadurch gekennzeichnet, dass** der zu erwartende Verlauf der Sensortemperatur (T_LS) mittels eines messwertbezogenen empirischen Modells, eines physikalischen Modells oder eines kombinierten empirisch-physikalischen Modells ermittelt wird.

11. Verfahren nach einem der vorhergehenden Ansprüche, **dadurch gekennzeichnet, dass** nach Erreichen der maximal zulässigen Sensortemperatur (T_LSmax) der Abgassensor (32) auf dieser Temperatur gehalten wird.

12. Kraftfahrzeug mit einem Verbrennungsmotor (12), einem in einem Angaskanal (28) des Verbrennungsmotors (12) angeordneten und mit einer internen oder externen Sensorheizeinrichtung (34) ausgestatteten Abgassensor (32) und mit einer Abschaltautomatik, welche bei Vorlegen mindestens einer Stopp-Bedingung eine automatische Abschaltung des Verbrennungsmotors (12) bewirkt, **dadurch gekennzeichnet, dass** das Kraftfahrzeug Mittel zur Steuerung des Betriebs des Abgassensors (32) aufweist derart, dass
(a) nach einer automatischen Abschaltung des Verbrennungsmotors (12) durch die Abschaltautomatik ein erster zukünftiger Zeitpunkt (t3) ermittelt wird, an dem die Abgastemperatur (T_AG) im Abgaskanal (28) eine Kondensationstemperatur (T_AGmin) unterschreiten wird, unterhalb welcher ein Kondensatausfall aus dem Abgas möglich ist,
(b) ein zweiter Zeitpunkt (t1) ermittelt wird, an dem eine Heizleistung der Sensorheizeinrichtung (34) unterbrochen oder reduziert werden muss, damit spätestens zum ersten zukünftigen Zeitpunkt (t3) eine Sensortemperatur (T_LS) des Abgassensors (32) auf eine maximal zulässige Sensortemperatur (T_LSmax) abgefallen sein wird, und
(c) bei Erreichen des zweiten Zeitpunkts (t1) die Heizleistung der Sensorheizeinrichtung (34) unterbrochen oder reduziert wird.

13. Kraftfahrzeug nach Anspruch 12, **dadurch gekennzeichnet, dass** das Mittel zur Steuerung des Betriebs des Abgassensors (32) einen Programmalgorithmus zur Durchführung der Steuerung umfasst, der insbesondere in einem Motorsteuergerät (28) oder einer separaten Steuereinheit hinterlegt ist.

14. Kraftfahrzeug nach einem der Ansprüche 12 bis 13, **dadurch gekennzeichnet, dass** der Abgassensor eine Lambdasonde oder ein NOₓ-Sensor ist.

15. Kraftfahrzeug nach einem der Ansprüche 12 bis 14, **dadurch gekennzeichnet, dass** das Kraftfahrzeug ein Hybridfahrzeug mit zusätzlich mindestens einem Elektromotor (14) ist.

## Claims

1. Method for controlling the operation of an exhaust gas sensor (32) which is arranged in an exhaust gas duct (28) of a motor vehicle and is provided with an internal or external sensor heating device (34), with the motor vehicle comprising an internal combustion engine (12) and an automatic shutoff arrangement which, in the presence of at least one stop condition, automatically shuts off the internal combustion engine (12), **characterized in that**
(a) after an automatic shutoff of the internal combustion engine (12) by the automatic shutoff arrangement, a first future time (t3) is determined at which the exhaust gas temperature (T_AG) in the exhaust gas duct (28) will fall below a condensation temperature (T_AGmin) below which a precipitation of condensate out of the exhaust gas is possible,
(b) a second time (t1) is determined at which a heating power of the sensor heating device (34) must be interrupted or reduced in order that, at the latest at the first future time (t3), a sensor temperature (T_LS) of the exhaust gas sensor (32) will have fallen to a maximum permissible sensor temperature (T_LSmax), and
(c) when the second time (t1) is reached, the heating power of the sensor heating device (34) is interrupted or reduced.

2. Method according to Claim 1, **characterized in that**, in order to determine the second time (t1), a safety timespan (Δt_s), by which the second time (t1) is brought forward, is taken into consideration.

3. Method according to Claim 1 or 2, **characterized in that** the determination of the first future time (t3) at which the exhaust gas temperature (T_AG) in the exhaust gas duct (28) will fall below the condensation temperature (T_AGmin) takes place on the basis of an exhaust gas temperature profile (T_AG) to be expected when the internal combustion engine (12) is shut off.

4. Method according to Claim 3, **characterized in that** the temperature profile to be expected is determined by means of an empirical model based on measured values, in particular taking into consideration an external temperature and/or a present exhaust gas temperature.

5. Method according to Claim 3 or 4, **characterized in that** the temperature profile to be expected is determined by means of a physical model which calculates the temperature profile on the basis of physical laws, in particular taking into consideration geometric preconditions of the exhaust system, thermal conductivities of the exhaust system, an external temperature and/or a present exhaust gas temperature.

6. Method according to one of Claims 3 to 5, **characterized in that** the temperature profile to be expected is determined for the installation location of the exhaust gas sensor (32) or for a position upstream of the exhaust gas sensor (32), in particular for a position of maximum cooling speed.

7. Method according to one of the preceding claims, **characterized in that** the first time (t3) at which the exhaust gas temperature (T_AG) in the exhaust gas duct (28) will fall below the condensation temperature (T_AGmin) is corrected continuously, as a function of a measured present exhaust gas temperature, during the stop mode of the internal combustion engine (12) and before the second time (t1) is reached.

8. Method according to one of the preceding claims, **characterized in that** the determination of the second time (t1) at which the heating power of the sensor heating device (34) is to be interrupted or reduced takes place on the basis of a sensor temperature profile (T_LS) to be expected when the internal combustion engine (12) is shut off.

9. Method according to Claim 8, **characterized in that** the sensor temperature profile (T_LS) to be expected is determined as a function of the determined exhaust gas temperature profile (T_AG).

10. Method according to Claim 8 or 9, **characterized in that** the sensor temperature profile (T_LS) to be expected is determined by means of an empirical model based on measurement values, by means of a physical model or by means of a combined empirical-physical model.

11. Method according to one of the preceding claims, **characterized in that**, after the maximum permissible sensor temperature (T_LSmax) is reached, the exhaust gas sensor (32) is held at said temperature.

12. Motor vehicle having an internal combustion engine (12), having an exhaust gas sensor (32) which is arranged in an exhaust duct (28) of the internal combustion engine (12) and having an exhaust gas sensor (32) which is provided with an internal or external heating device (34) and having an automatic shutoff arrangement which, in the presence of at least one stop condition, automatically shuts off the internal combustion engine (12), **characterized in that** the motor vehicle has means for controlling the operation of the exhaust gas sensor (32), in such a way that
(a) after an automatic shutoff of the internal combustion engine (12) by the automatic shutoff arrangement, a first future time (t3) is determined at which the exhaust gas temperature (T_AG) in the exhaust gas duct (28) will fall below a condensation temperature (T_AGmin) below which a precipitation of condensate out of the exhaust gas is possible,
(b) a second time (t1) is determined at which a heating power of the sensor heating device (34) must be interrupted or reduced in order that, at the latest at the first future time (t3), a sensor temperature (T_LS) of the exhaust gas sensor (32) will have fallen to a maximum permissible sensor temperature (T_LSmax), and
(c) when the second time (t1) is reached, the heating power of the sensor heating device (34) is interrupted or reduced.

13. Motor vehicle according to Claim 12, **characterized in that** the means for controlling the operation of the exhaust gas sensor (32) comprises a program algorithm for carrying out the control, which program algorithm is in particular stored in an engine control unit (28) or a separate control unit.

14. Motor vehicle according to one of Claims 12 to 13, **characterized in that** the exhaust gas sensor is a lambda probe or a NOₓ sensor.

15. Motor vehicle according to one of Claims 12 to 14, **characterized in that** the motor vehicle is a hybrid vehicle with additionally at least one electric motor (14).

## Revendications

1. Procédé pour commander le fonctionnement d'un capteur de gaz d'échappement (32) disposé dans un canal d'échappement de gaz (28) d'un véhicule automobile et pourvu d'un dispositif de chauffage (34) interne ou externe au capteur (32), le véhicule automobile comportant un moteur à combustion interne (12) et un dispositif de coupure automatique, lequel opère une coupure automatique du moteur à combustion interne (12) en présence d'au moins une condition d'arrêt,
**caractérisé en ce que**
(a) après une coupure automatique du moteur à combustion interne (12) par le dispositif de coupure automatique, un premier moment futur (t3), auquel la température de gaz d'échappement (T_AG) dans le canal d'échappement de gaz (28) devient inférieure à une température de condensation (T_AGmin) au-dessous de laquelle une formation de condensat à partir des gaz d'échappement est possible, est déterminé,
(b) un deuxième moment (t1), auquel une puissance de chauffage du dispositif de chauffage (34) du capteur (32) doit être interrompue ou réduite 'afin qu'une température de capteur (T_LS) du capteur de gaz d'échappement (32) soit abaissée à une température de capteur maximale admissible (T_LSmax au plus tard au premier moment futur (t3), est déterminé et
(c) la puissance de chauffage du dispositif de chauffage (34) du capteur est interrompue ou réduite lorsque le deuxième moment (t1) est atteint.

2. Procédé selon la revendication 1, **caractérisé en ce qu'**il est tenu compte d'un espace de temps de sécurité (Δt_s), autour duquel le deuxième moment (t1) est déplacé, afin de déterminer le deuxième moment (t1).

3. Procédé selon la revendication 1 ou 2, **caractérisé en ce que** la détermination du premier moment futur (t3), auquel la température de gaz d'échappement (T_AG) dans le canal d'échappement de gaz (28) devient inférieure à la température de condensation (T_AGmin), a lieu à l'aide d'une allure prévisible de la température de gaz d'échappement (T_AG) lorsque le moteur à combustion interne (12) est coupé.

4. Procédé selon la revendication 3, **caractérisé en ce que** l'allure prévisible de la température est déterminée au moyen d'un modèle empirique basé sur des valeurs mesurées, en particulier en tenant compte d'une température extérieure et/ou d'une température actuelle des gaz d'échappement.

5. Procédé selon la revendication 3 ou 4, **caractérisé en ce que** l'allure prévisible de la température est déterminée au moyen d'un modèle physique, lequel calcule l'allure de la température à l'aide de lois physiques, en particulier en tenant compte d'hypothèses géométriques du système d'échappement de gaz, de conductibilités thermiques du système d'échappement de gaz, d'une température extérieure et/ou d'une température actuelle des gaz d'échappement.

6. Procédé selon l'une des revendications 3 à 5, **caractérisé en ce que** l'allure prévisible de la température est déterminée pour l'endroit de montage du capteur de gaz d'échappement (32) ou pour une position en amont du capteur de gaz d'échappement (32), en particulier pour une position correspondant à une vitesse maximale de refroidissement.

7. Procédé selon l'une quelconque des revendications précédentes, **caractérisé en ce que** le premier moment (t3), auquel la température de gaz d'échappement (T_AG) dans le canal d'échappement de gaz (28) devient inférieure à la température de condensation (T_AGmin), est corrigé en permanence en fonction d'une température actuelle mesurée des gaz d'échappement pendant l'état d'arrêt du moteur à combustion interne (12) et avant que le deuxième moment (t1) soit atteint.

8. Procédé selon l'une quelconque des revendications précédentes, **caractérisé en ce que** la détermination du deuxième moment (t1), auquel la puissance de chauffage du dispositif de chauffage (34) du capteur doit être interrompue ou réduite, a lieu à l'aide d'une allure prévisible de la température du capteur (T_LS) lorsque le moteur à combustion interne (12) est coupé.

9. Procédé selon la revendication 8, **caractérisé en ce que** l'allure prévisible de la température du capteur (T_LS) est déterminée en fonction de l'allure déterminée de la température des gaz d'échappement (T_AG).

10. Procédé selon la revendication 8 ou 9, **caractérisé en ce que** l'allure prévisible de la température du capteur (T_LS) est déterminée au moyen d'un modèle empirique basé sur des valeurs mesurées, d'un modèle physique ou d'un modèle empirique et physique combiné.

11. Procédé selon l'une quelconque des revendications précédentes, **caractérisé en ce qu'**après avoir atteint la température de capteur maximale admissible (T_LSmax), le capteur de gaz d'échappement (32) est maintenu à ladite température.

12. Véhicule automobile comportant un moteur à combustion interne (12), un capteur de gaz d'échappement (32) disposé dans un canal d'échappement de gaz (28) du moteur à combustion interne (12) et pourvu d'un dispositif de chauffage (34) interne ou externe au capteur, et un dispositif de coupure automatique, lequel opère une coupure automatique du moteur à combustion interne (12) en présence d'au moins une condition d'arrêt, **caractérisé en ce que** le véhicule automobile présente des moyens pour la commande du fonctionnement du capteur de gaz d'échappement (32), de telle manière que
(a) après une coupure automatique du moteur à combustion interne (12) par le dispositif de coupure automatique, un premier moment futur (t3), auquel la température de gaz d'échappement (T_AG) dans le canal d'échappement de gaz (28) devient inférieure à une température de condensation (T_AGmin) au-dessous de laquelle une formation de condensat à partir des gaz d'échappement est possible, soit déterminé,
(b) un deuxième moment (t1), auquel une puissance de chauffage du dispositif de chauffage (34) du capteur (32) doit être interrompue ou réduite afin qu'une température de capteur (T_LS) du capteur de gaz d'échappement (32) soit abaissée à une température de capteur maximale admissible (T_LSmax au plus tard au premier moment futur (t3), soit déterminé et
(c) la puissance de chauffage du dispositif de chauffage (34) du capteur soit interrompue ou réduite lorsque le deuxième moment (t1) est atteint.

13. Véhicule automobile selon la revendication 12, **caractérisé en ce que** le moyen pour commander le fonctionnement du capteur de gaz d'échappement (32) comporte un algorithme de programme destiné à exécuter la commande, lequel est intégré en particulier dans un dispositif de commande de moteur (28) ou une unité de commande séparée.

14. Véhicule automobile selon l'une des revendications 12 ou 13, **caractérisé en ce que** le capteur de gaz d'échappement est une sonde lambda ou un capteur de NOₓ.

15. Véhicule automobile selon l'une des revendications 12 à 14, **caractérisé en ce que** le véhicule automobile est un véhicule hybride comportant en plus au moins un moteur électrique (14).
